# DEMANDE DE BREVET EUROPEEN

(11) **EP 0 688 845 A1**
(43) Date de publication de la demande: **27.12.1995**
(21) Numéro de dépôt: 95401296.9
(22) Date de dépôt: 02.06.1995
(51) Int. Cl.: C09J 7/04, C09J 7/02

(54) **Bande adhésive double face asymétrique**

(30) Priorité: 15.06.1994 FR 9407303
(71) Demandeur: PLASTO S.A., F-21300 Chenôve (FR)
(72) Inventeur: Guillemet, Alain, F-21121 Fontaine les Dijon (FR)
(74) Mandataire: Levy, David

(57) **Abrégé**

La bande adhésive double face asymétrique comporte un support (1) recouvert sur l'une de ses faces (1') par un adhésif réactivable à l'eau (2) et sur l'autre face (1'') par un adhésif sensible à la pression (3).

Application à l'assemblage de matériaux de nature différente.

## Description

La présente invention concerne une bande adhésive nouvelle, revêtue d'adhésif sur ses deux faces et dont les adhésifs portés sur chacune des faces sont de type différent.

### Art antérieur :

On connaît de nombreux types de bandes adhésives à double face, dont les deux faces de la bande sont recouvertes d'une couche adhésive. Ces types de bande double face se différencient par le type de support utilisé (feuille de polymère ou tissu) et par le type de la masse adhésive enduite sur les deux faces. Ces bandes sont par exemple utilisées pour fixer les moquettes sur le sol ou pour fixer des photographies dans un album. Il existe également des produits vendus sous forme de pastilles adhésives à double face et utilisées pour fixer des objets ou des crochets sur un support lisse, ces pastilles étant le plus souvent constituées d'une feuille support en mousse de polymère revêtue d'adhésif sur ses deux faces, le tout étant protégé par des papiers de protection pelables. On peut cependant remarquer que tous ces types de produit sont revêtus sur deux faces du support d'un même adhésif sensible à la pression qui convient bien pour des applications générales mais dont 1' efficacité devient insuffisante lorsque les surfaces recevant l'adhésif sont rugueuses, poreuses ou poussiéreuses.

En effet, lorsque la bande adhésive doit être appliquée sur une surface rugueuse ou poreuse, la masse adhésive en contact ne peut s'introduire entre les rugosités et n'assure la liaison qu'au sommet des rugosités. Il s'ensuit que la bande adhésive n'est en contact que sur une partie de sa surface, dépendant uniquement de la nature de la surface recouverte par ladite bande. Lorsque la surface à revêtir par la bande adhésive change d'état au cours du temps, par exemple lors ou après ressuage, alors le pouvoir adhésif de la bande est susceptible d'être altéré et il peut s'en suivre un décollement de la bande adhésive.

### Objet de l'invention :

La bande adhésive double face selon l'invention est constituée d'un support revêtu sur l'une de ses faces d'une couche d'adhésif sensible à la pression et d'une feuille de protection pelable et, sur l'autre face, d'une couche d'adhésif réactivable à l'eau.

La bande adhésive double face selon l'invention permet en raison de la nature différente des adhésifs, d'assembler des objets dont les constituants ne sont pas compatibles avec une même colle ou un même adhésif sensible à la pression.

C'est ainsi que la face recouverte d'une couche d'adhésif réactivable à l'eau convient pour tous les matériaux poreux et en général aux matériaux hydrophiles, tandis que la face recouverte d'une couche d'adhésif sensible à la pression est utilisée pour recevoir les objets habituels et compatibles avec un tel type d'adhésif.

D'autres caractéristiques et avantages apparaîtront clairement à la lecture d'un mode de réalisation préféré de l'invention, ainsi que des dessins annexés sur lesquels :
la figure 1 est une vue schématique et partielle en coupe d'une bande adhésive selon la présente invention.
La figure 2 est une représentation schématique des moyens de réalisation de la bande représentée sur la figure 1.

### Description détaillée de l'invention :

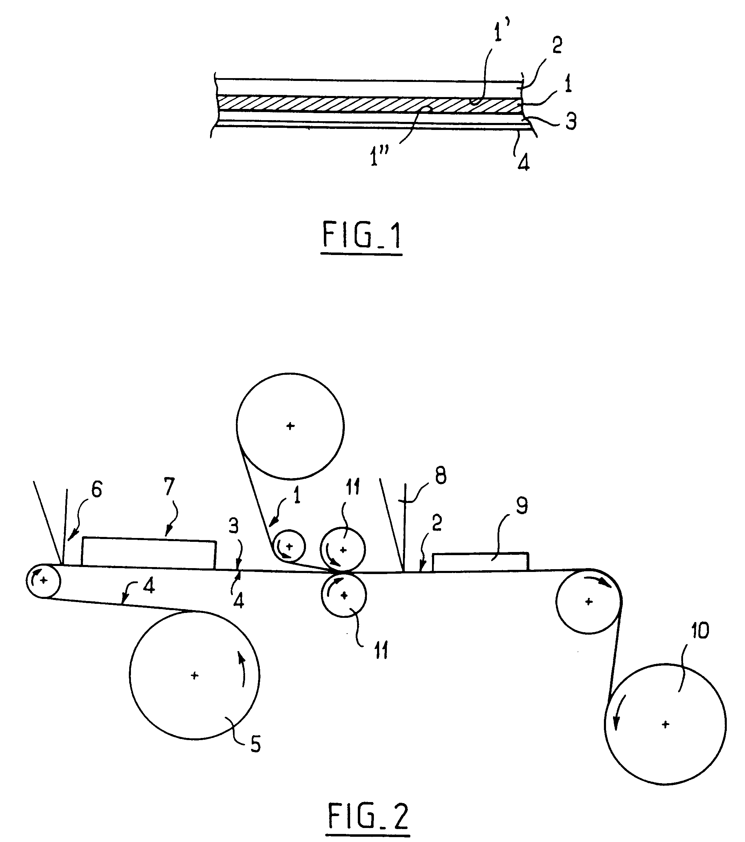

Une bande adhésive selon l'invention, représentée sur la figure 1, est d'une façon générale, constituée par un support 1 dont l'une des faces 1' est recouverte d'une couche d'adhésif ou colle réactivable à l'eau 2 et dont l'autre face 1'' est recouverte d'une couche d'un adhésif sensible à la pression 3, ladite couche d'adhésif sensible à la pression étant elle-même recouverte d'une feuille de protection pelable 4.

Le support 1 peut se présenter sous forme d'un film de faible épaisseur, d'un non tissé ou d'une mousse de faible épaisseur à cellules fermées. Pour certaines applications, il est possible également d'utiliser un support 1 composite comme par exemple un film de polymère renforcé avec des fils ou un tissu de verre, ou un film contrecollé avec un non-tissé. Le constituant du support 1 sera de préférence un polymère non hydrosoluble et procurant une bonne cohésion à la fois avec un adhésif sensible à la pression et avec un adhésif réactivable à l'eau. Un support préféré pour réaliser une bande adhésive selon l'invention est constitué d'un non tissé en polyester.

La couche adhésive 2 réactivable à l'eau est du type des colles utilisées dans le domaine des papiers peints comme par exemple des colles à base de dextrines ou à base d'alcools polyvinyliques. On obtient ainsi, après enduction et séchage, une face recouverte d'une masse non collante qu'il est possible d'enrouler sur elle-même sans protection. Cette masse peut être rendue collante par un simple mouillage avec de l'eau, par exemple par immersion momentanée dans l'eau de la bande ou par pulvérisation d'un brouillard d'eau. Dans le cas de l'utilisation d'un support 1 de type composite film et non tissé, la couche adhésive réactivable à l'eau sera de préférence appliquée sur la face non-tissé.

La couche adhésive 3 sensible à la pression peut être choisie parmi les types d'adhésifs utilisés pour fabriquer des rubans adhésifs sensibles à la pression et non hydrosolubles : masses en phase solvant, masses en émulsion ou masses "hot-melt".

Le film protecteur 4 pelable est choisi parmi les produits connus comme par exemple un film de polyéthylène ou un papier hydrofuge siliconé.

La fabrication suivante est donnée à titre d'exemple et ne saurait limiter l'invention à ce type de bande adhésive, essentiellement quant à la nature des constituants et aux exemples d'application.

La figure 2 représente le schéma de principe de la fabrication d'un ruban adhésif double face selon l'invention.

Sur un métier à enduire, on effectue le dépôt d'une couche de masse acrylique 3, de type 1054 de la société National et constituant la couche sensible à la pression, sur un film protecteur 4, déroulé à partir d'une bobine 5 et constitué par un papier siliconé sur les deux faces de type R.2020 de la société FLEXEUROP, de façon à obtenir 50 g/m2 d'adhésif après séchage. Le dépôt de la couche d'adhésif 3 s'effectue selon des procédés connus de l'homme de l'art, par exemple avec un racle 6. Après séchage dans un poste de séchage 7 de la couche d'adhésif sensible à la pression 3, on dépose sur la face libre de la couche d'adhésif 3 un voile de non-tissé de polyester, type 7250 de la société FREUDENBERG, ledit voile de non-tissé constituant le support 1. Le voile 1 et le film protecteur 4 recouvert de la couche d'adhésif sensible à la pression 3 passent entre deux cylindres de pression 11 avant de procéder au dépôt de la couche réactivable à l'eau. Enfin, on enduit la face supérieure 1' du voile de non-tissé 1 d'une masse non collante réactivable à l'eau 2 du type FLASH SEAL 2T152 de la société AVECHEMIE, au moyen, par exemple, d'un racle 8, à raison d'environ 100 g par m². On obtient de cette façon une bande adhésive double face asymétrique selon l'invention, formée d'un support non-tissé en polyester recouvert sur une face 1' par un adhésif réactivable à l'eau 2 et sur l'autre face 1" par un adhésif sensible à la pression 3, ce dernier étant protégé par une feuille de papier siliconé de protection 4. Le produit séché en 9, peut être présenté sous forme de bande de grande longueur enroulée sur une bobine 10 ou sous forme de pastilles découpées.

Une bande adhésive double face asymétrique selon l'invention trouve son application lorsqu'on souhaite assembler des matériaux de nature différente comme par exemple fixer un article en matière plastique sur une surface en ciment, en plâtre ou en bois.

A titre d'exemple de mise en oeuvre, si l'on souhaite fixer un petit objet ou une plaque en matière plastique sur un mur de plâtre, on découpe un fragment de la bande que l'on humidifie en la passant sous l'eau ou en pulvérisant de l'eau sur la face "adhésive réactivable à l'eau" puis on colle la bande sur le mur de plâtre. Après avoir laissé le temps à la colle d'imprégner le mur de plâtre, on retire le papier protecteur siliconé et on appose directement l'objet à fixer sur l'adhésif sensible à la pression : le collage est immédiat et l'objet est fixé au mur. L'imprégnation permet à la colle de diffuser entre les rugosités du plâtre et de réaliser ainsi une grande surface collante.

Une autre application concerne la pose des moquettes pour laquelle on fixe la bande sur le sol après l'avoir mouillée à l'eau, puis on retire le papier protecteur et on pose la moquette sur l'adhésif sensible à la pression. En utilisant la bande adhésive selon l'invention, il est possible de fixer une moquette sur un sol en ciment même si celui-ci n'a pas été parfaitement dépoussiéré alors que la fixation serait très aléatoire en utilisant une bande adhésive double face classique dont les deux faces sont recouvertes d'un adhésif sensible à la pression.

Dans tous les cas, I'enlèvement de la protection pelable 4 n'altère pas la couche sensible à la pression 3 qui reste fixée sur le voile non-tissé 1.

Dans une application particulière telle que la pose d'un carreau en verre, en faïence légère ou en matière plastique, il est possible de recouvrir au moins partiellement une des faces dudit carreau par un ruban selon la présente invention. Pour cela, on applique sur le carreau la face recouverte d'adhésif sensible à la pression de la bande, qui est compatible avec la nature du carreau. Le carreau peut, par la suite, être fixé sur un support poreux après avoir activé l'adhésif réactivable à l'eau au moyen d'une pulvérisation d'eau. Inversement, un objet en bois pourrait être rendu adhésif sur l'une de ses faces en fixant la bande selon l'invention par sa face recouverte d'adhésif réactivable à l'eau. Cet objet pourra être fixé sur une surface lisse simplement après avoir retiré le protecteur de l'adhésif sensible à la pression.

## Revendications

1. Bande adhésive double face constituée d'un support (1) comportant une couche de masse adhésive sur chacune de ses faces, caractérisée en ce qu'une des faces (1') du support est recouverte d'un adhésif réactivable à l'eau (2) et l'autre face (1'') dudit support est recouverte d'un adhésif sensible à la pression (3), ledit adhésif réactivable à l'eau étant non collant à l'état sec.

2. Bande adhésive double face selon la revendication 1, caractérisée en ce que le support (1) est un voile non-tissé en polyester.

3. Bande adhésive double face selon l'une quelconque des revendications précédentes, caractérisée en ce que l'adhésif sensible à la pression (3) est une masse de type acrylique.

4. Bande adhésive double face selon l'une des revendications 1 ou 2, caractérisée en ce que l'adhésif réactivable à l'eau (2) est une colle à base de dextrines ou d'alcools polyvinyliques.

5. Bande adhésive double face selon la revendication 3, caractérisée en ce que le support (1) est enduit d'une couche de masse acrylique (3) à raison de 50 g/m² après séchage.

6. Bande adhésive double face selon la revendication 4, caractérisée en ce que la couche de colle est déposée à raison de 100 g/m².

7. Bande adhésive double face selon la revendication 1, caractérisée en ce que la couche de masse adhésive sensible à la pression est protégée par un film de protection pelable (4).

8. Utilisation d'une bande adhésive selon l'une des revendications 1 à 7, pour rendre un objet adhésif par l'une de ses faces.

9. Utilisation selon la revendication 8, caractérisée en ce que l'objet est rendu adhésif par la face (1') du support (1) recouverte d'adhésif réactivable à l'eau.

10. Utilisation selon la revendication 8, caractérisée en ce que l'objet est rendu adhésif par la face (1") du support (1) recouverte d'adhésif sensible à la pression.
